Europäisches Patentamt

European Patent Office

Office européen des brevets

(11) Publication number: 0 405 491 A2

# EUROPEAN PATENT APPLICATION

(21) Application number: 90112236.6

(22) Date of filing: 27.06.90

(51) Int. Cl.5: **H04N 5/91**, H04N 9/79, H04N 1/21, G11B 20/10, H04N 5/92

(30) Priority: 30.06.89 JP 166634/89

(43) Date of publication of application:
02.01.91 Bulletin 91/01

(84) Designated Contracting States:
DE GB

(71) Applicant: HITACHI, LTD.
6, Kanda Surugadai 4-chome
Chiyoda-ku, Tokyo 101(JP)

(72) Inventor: Watatani, Yoshizumi
1379-15 Chogo
Fujisawa-shi(JP)
Inventor: Shibata, Akira
4-4 Uragaoka 2-chome
Yokosuka-shi(JP)
Inventor: Mari, Fujio
12-7 Omachi 4-chome
Kamakura-shi(JP)

(74) Representative: Altenburg, Udo, Dipl.-Phys. et al
Patent- und Rechtsanwälte
Bardehle-Pagenberg-Dost-Altenburg
Frohwitter-Geissler & Partner Postfach 86 06 20 20
D-8000 München 86(DE)

(54) **Apparatus for recording and reproducing digital still image signal.**

(57) There is provided an apparatus which has functions of both of a video camera and an electrophotographic system and in which a video signal from the video camera is recorded as an analog motion picture signal onto a tape (17) and also concurrently selectively records and reproduces either the digital audio signal or the still image signal obtained by digitizing the video signal from the video camera into/from an area different from the area to record the analog motion picture signal on the tape.

FIG. I

# APPARATUS FOR RECORDING AND REPRODUCING DIGITAL STILL IMAGE SIGNAL

## BACKGROUND OF THE INVENTION

The present invention relates to an apparatus for recording and reproducing a motion picture signal by using a magnetic tape and, more particularly, to an apparatus in which a still image signal together with an analog motion picture signal can be recorded and reproduced as a digital signal into/from another area different from an area of the analog motion picture signal.

As a home-use video recording apparatus, a magnetic tape recording and reproducing apparatus (hereinafter, referred to as a VTR) has conventionally been known. However, even if an output signal of a video camera provides a sufficiently high picture quality, in such a home-use VTR in which a condition such that an analog motion picture signal is recorded is used as a prerequisite, a video signal of an enough wide band cannot be recorded and reproduced. Therefore, although the picture quality is sufficiently high as a motion picture signal, only an extremely insufficient picture quality is derived as a still image signal. Therefore, there is considered an electrophotographic system in which a video signal of a high picture quality is recorded as a still image signal into a magnetic floppy disk or an RAM (random access memory) or the like. However, when considering the actual using state, it is difficult to simultaneously effectively use both of the VTR and the electrophotographic system and the user cannot help using either one of them. In this case, a video signal is recorded by the VTR and the still image signal can be extracted from the reproduced motion picture signal. However, contrarily, when a video signal was recorded by the electrophotographic system, the motion picture signal cannot be obtained. Therefore, the user cannot help using the VTR as a general video signal recording and reproducing system in consideration of the application fields of both of the VTR and the electrophotographic system. Thus, only an image signal of an insufficient picture quality can be obtained as a still image signal.

On the other hand, there is a strong demand to enable an audio signal of a high sound quality to be recorded together with the motion picture signal. To meet such a demand, a method whereby an area to record a digital audio signal is provided separately from an area to record the motion picture signal has been shown in JP-B-60-8525 (corresponding to JP-A-55-32296) or JP-A-63-171402. According to such an audio signal recording method, even if a tape running speed is reduced and an audio signal is recorded, the sound quality is not influenced. However, in the above proposed recording method, only the recording of the digital audio signal into another different area is shown. The maximum advantage of such a recording method, that is, a point that a feature in which two information signals can be recorded in parallel is effectively used is not proposed.

On the other hand, a method of recording a video signal into the digital audio signal recording area has been proposed in JP-A-62-33371 filed in the name of the assignee. However, none of the countermeasures for the subjects such as organic interconnection, interlocked operation, and the like with the video camera is disclosed.

## SUMMARY OF THE INVENTION

It is an object of the invention to provide a recording and reproducing apparatus in which both of an analog motion picture signal and a still image signal of a high picture quality by the digital recording method can be concurrently recorded.

Another object of the invention is to provide a recording and reproducing apparatus in which a digital audio signal or a digital still image signal can be selectively recorded concurrently with an analog motion picture signal.

Further another object of the invention is to provide a recording and reproducing apparatus in which a video signal of a high picture quality from a video camera can be recorded as a digital still image signal at an arbitrary timing.

Further another object of the invention is to provide a recording and reproducing apparatus having the functions of both of a video camera and an electrophotographic system.

To accomplish the above objects, according to the invention, while a motion picture signal obtained from a video camera is being recorded, an arbitrary still image signal is selected from the output signal of the video camera and recorded into a digital memory such as an RAM or the like and, thereafter, the signals which were sequentially read out of the digital memory are divisionally recorded into digital audio signal recording areas of a plurality of recording tracks.

With the above construction, during the recording of the motion picture signal, the still image signal of a high picture quality can be recorded at an optimum timing without losing a good chance. In this case, to keep the picture quality of the still image signal high, it is sufficient to not only improve the performance of the video camera but also execute the digitization by an enough high sampling frequency and an enough large number of bits. since the audio signal is generally digitized at a sampling frequency of 48 kHz and at the number of digitization bits of 16 bits, a quantity of digital audio data of two channels to be transmitted is set to about 1.54 Mbits/sec. On the other hand, for the digitization of the video signal, in a high picture quality system of the highest level which is used in a broadcasting station or the like, a sampling frequency of a luminance signal is set to 13.5 MHz and the number of digitization bits thereof is set to 8 bits, while a sampling frequency of each of two kinds of color difference signals is set to 6.75 MHz ( = 13.5 MHz/2) and the number of digitization bits thereof is likewise set to 8 bits, so that a data transmission quantity is set to 216 Mbits/sec. In the above data transmission quantity, if it is considered that only the data in the effective picture plane portion excluding the blanking period is transmitted, the necessary data transmission quantity is reduced to about 167 Mbits/sec (5.6 Mbits/frame). Therefore, when a digital video signal is recorded into the digital audio signal recording area by the above method, the still image signal can be recorded at a time interval of 3.6 seconds/frame (in a form such that the signal is divided into 217 tracks). The invention is not limited to the above digitizing method but it is also possible to digitize the video signal in a form of what is called a composite signal in which an enough high picture quality can be obtained as a home-use system. In such a case, the data transmission quantity is set to about 94 Mbits/sec (2.13 Mbits/frame) and the still image signal can be recorded at a time interval of 2.0 seconds/frame (in a form such that the signal is divided into 122 tracks). Although a little longer recording time is required, it is more advantageous to record an image in the form of a luminance signal and two color difference signals since they are readily converted into R, G and B primary color signals with almost no picture quality degradation when the apparatus is connected to a video printer or the like.

In the case of the general video signal, since the interlacing process of 1 : 2, that is, a jumping operation is performed, when a still image is extracted from the motion picture image by using a frame as a unit and is reproduced, there is a case where what is called a flicker occurs in the motion picture image portion. To prevent the occurrence of such a flicker, it is sufficient to extract the signal of 1 : 1 by executing the non-interlace scan of the video camera and, thereafter, to record the signal in an interlacing form of 1 : 2. It will be obviously understood that there is no need to execute such a process in the case of recording the still image signal on a field unit basis.

In the reproducing mode, since the still image signal of a high picture quality can be output concurrently with the output of the motion picture signal, both of those image signals can be selectively output or the still image signal is connected to a video printer or the like and can be also printed out and preserved as a still image.

## BRIEF DESCRIPTION OF THE DRAWINGS

Fig. 1 is a block diagram showing a system of the recording system in a recording and reproducing apparatus according to an embodiment of the present invention;

Fig. 2 is a diagram showing a conventional tape recording pattern;

Fig. 3 is a diagram showing a recording signal current of each head in a conventional apparatus;

Fig. 4 is a diagram showing the operation of a solid-state image pickup device having the electronic shutter function;

Fig. 5 is a block diagram showing a system on the reproducing system to reproduce the signal recorded by the embodiment of Fig. 1;

Fig. 6 is a block diagram showing a system of the recording system of a recording and reproducing apparatus according to another embodiment of the invention; and

Fig. 7 is a cross sectional view of a tape for explaining a recording method by the system of the recording system in Fig. 6.

## DESCRIPTION OF PREFERRED EMBODIMENTS

An embodiment of the present invention will be described hereinbelow with reference to the drawings. Explanation will be first made with respect to an embodiment in the case where the invention was applied to a system which is used in a system such as an 8-mm VTR or the like and in which a digital audio signal is recorded onto the portion on the extending line of a video signal track.

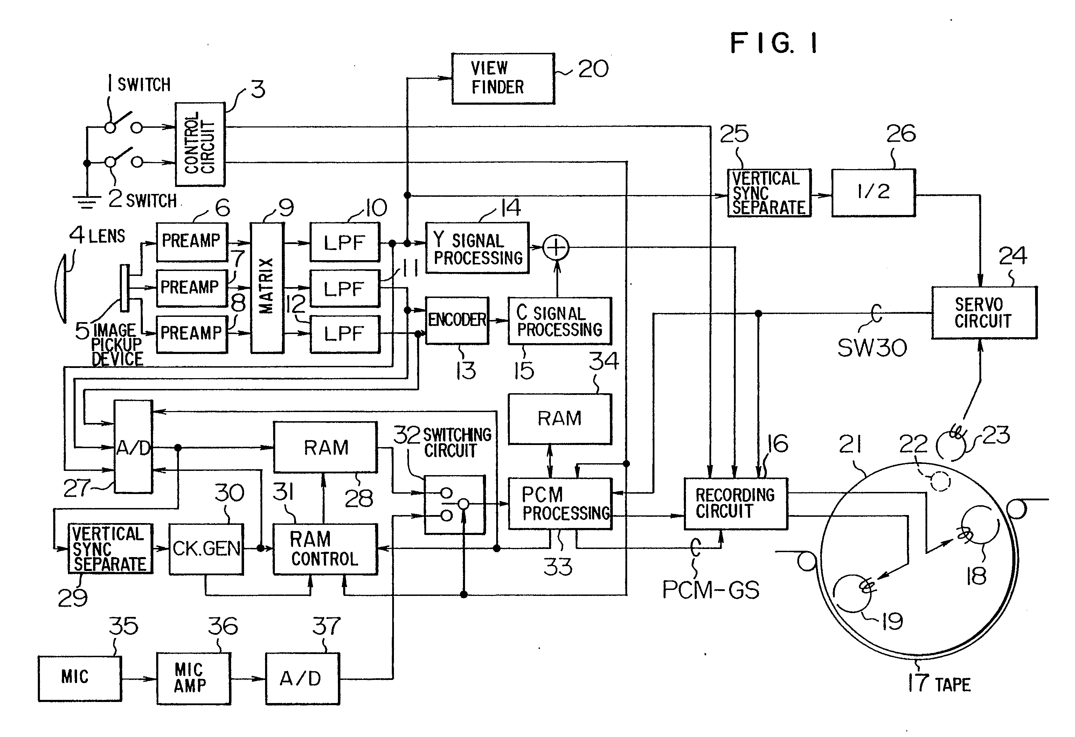

Fig. 1 is a block diagram showing a system of the recording system in a recording and reproducing apparatus to which the invention was applied and in which a motion picture signal and a digital still image signal of a high picture quality can be concurrently recorded. In Fig. 1, reference numerals 1 and 2 denote switches; 3 indicates a control circuit; 4 an image pickup lens; 5 an image pickup device; 6, 7, and 8 preamplifiers; 9 a matrix circuit; 10, 11 and 12 low pass filters (LPFs); 13 an encoder; 14 a recording luminance (Y) signal processing circuit; 15 a recording chrominance (C) signal processing circuit; 16 a recording circuit; 17 a tape; 18 and 19 recording heads; 21 a rotary cylinder; 22 a tack magnet; 23 a tack head; 24 a servo circuit; 25 and 29 vertical sync signal separating circuits; 26 a 1/2 frequency dividing circuit; 27 and 37 analog/digital (A/D) converters; 28 and 34 random access memories (RAMs); 30 a clock generating circuit; 31 an RAM control circuit; 32 a switching circuit; 33 a PCM processing circuit; 35 a microphone; and 36 a microphone amplifier.

The case of recording the motion picture signal and the digital audio signal will be first described. The image information which was formed as an image by the image pickup lens 4 is read out as electric signals in a form of primary color signals of red (R), green (G), and blue (B) or complementary color signals of cyan (Cy), magenta (Mg), and yellow (Ye) by the image pickup device 5. The electric signals are amplified by the preamplifiers 6, 7, and 8 and are thereafter added and synthesized by the matrix circuit 9 and are converted into a luminance signal (Y) and two kinds of color difference signals (R-Y) and (B-Y). After the unnecessary high frequency noise components in the luminance signal (Y) obtained as mentioned above were eliminated by the LPF 10, the luminance signal (Y) is subjected to processes such as emphasis, frequency modulation, and the like by the recording luminance signal processing circuit 14 in the VTR section and the processed signal is supplied to the adding circuit. On the other hand, the unnecessary high frequency noise components in the two kinds of color difference signals (R-Y, B-Y) are also similarly eliminated by the LPFs 11 and 12. After that, the color difference signals (R-Y, B-Y) are converted into a carrier chrominance signal by the encoder 13 and are processed by the recording chrominance signal processing circuit 15 in the VTR section. After that, the processed signal is added to the frequency modulated (FM) luminance signal by the adding circuit. The added FM luminance signal and chrominance signal are supplied to the heads 18 and 19 through the recording circuit 16 and recorded onto the video tape 17. To confirm the video image which is being photographed by the video camera, for instance, a view finder 20 which receives an output of the LPF 10 is used as an image monitor.

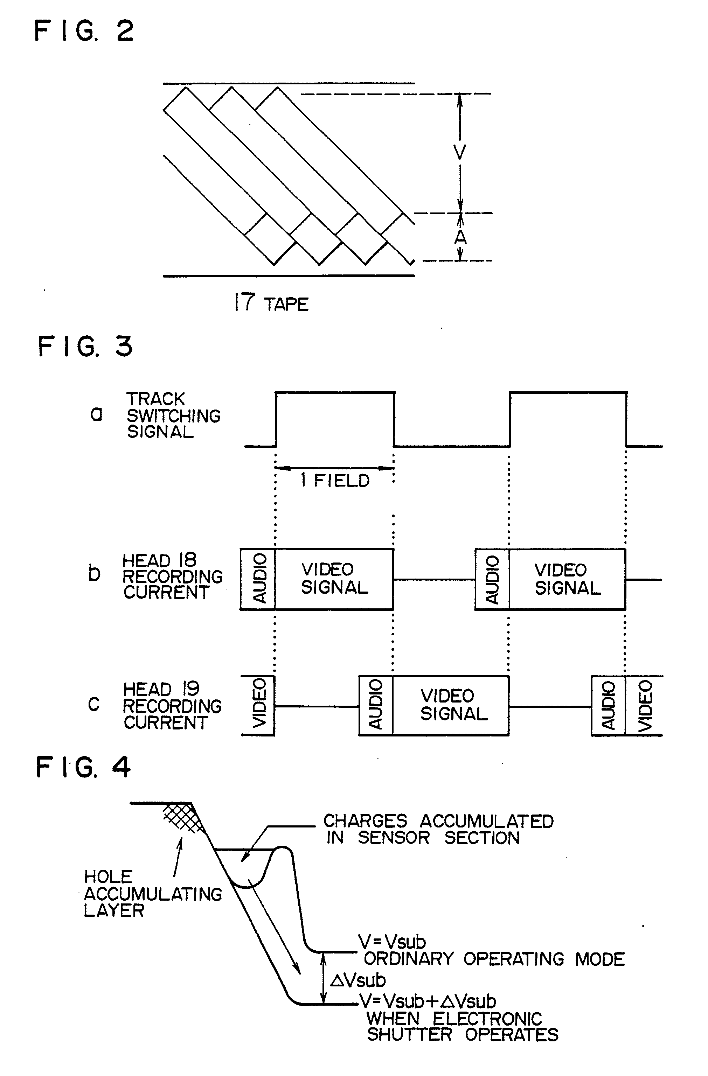

Fig. 2 is a diagram showing a recording pattern on the tape in an 8-mm VTR which has been used as an example. The video signal which is processed and recorded as mentioned above is recorded into a portion V in Fig. 2. On the other hand, the audio signal is time base compressed and recorded into a lower edge portion A on an extending line of the video track by the same head as the head which was used to record the video signal. Fig. 3 is a diagram showing recording currents which are supplied to the heads 18 and 19 and shows a state in which when the digital audio signal is being recorded by one of the heads, the video signal is being recorded by the other head.

The heads 18 and 19 are attached onto the rotary cylinder 21 and draw recording loci which are inclined from the running direction of the tape. The heads 18 and 19 alternatvely scan on the tape and record the signals thereon. What are called overlap portions are formed by setting a wrap angle of the tape 17 to the rotary cylinder 21 to be larger than an attaching angle of 180° of each of the two heads 18 and 19 on the rotary cylinder 21. The digital audio signal is recorded into the overlap portions.

The tack magnet 22 is attached onto the rotary cylinder 21 in order to obtain the rotational phase information of the rotary cylinder 21. The phase information is read out by the tack head 23 fixed to the outer portion of the rotary cylinder 21. The phase information of the rotary cylinder 21 is supplied to the servo circuit 24 and supplied to each circuit as a signal (a signal indicated at $SW_{30}$ in Fig. 1) to give a fundamental timing to control all of the recording processes. In the PCM processing circuit 33, the timing to give the recording signal to the recording circuit 16 is controlled on the basis of the signal $SW_{30}$. The recording circuit 16 switches the video signal and the digital audio signal on the basis of a signal (PCM-GS) indicative of the output timing for PCM data which is given from the PCM processing circuit 33 and the signal $SW_{30}$ which is given from the servo circuit 24. Then, the recording circuit 16 supplies the switched signal to the video heads 18 and 19.

The recording process of the audio signal will now be described. The audio signal obtained by the microphone 35 attached to the video camera is amplified by the microphone amplifier 36. Thereafter, the amplified signal is converted into the digital audio signal by the A/D converter 37. For digitization, as mentioned above, there is a case where the 16-bit digitization is performed at a sampling frequency of 48 kHz, which is generally used, or there is also a case where the sampling frequency or the number of digitization bits is reduced, thereby reducing the data transmission quantity and recording the signal. The clock frequency to drive the A/D converter 37 is determined by the audio signal sampling frequency. There is not always a simple frequency relation between the clock frequency and the field frequency of the video signal or the like. Therefore, in many cases, a reference frequency oscillator (not shown) is used. The digital audio signal obtained as mentioned above is supplied to the PCM processing circuit 33 through the switching circuit 32. In the PCM processing circuit 33, the RAM 34 is used as a buffer memory and the audio data of one field is stored into the RAM 34 on the basis of clocks from the reference frequency oscillator (not shown). The data is read out of the RAM 34 at a high speed in accordance with the audio signal recording timing by using the clocks with respect to the rotating frequency of the rotary cylinder 21 and is time base compressed. A code signal for error detection, a control signal indicating that the recording signal is the audio signal, and the like are added to the readout data. After that, the data is supplied to the recording circuit 16 together with the control signal (PCM-GS) indicative of the recording timing. In the recording circuit 16, on the basis of the control signal (PCM-GS) supplied from the PCM processing circuit 33, currents which are supplied to the heads 18 and 19 are switched as shown in Fig. 3 and recorded onto the tape.

The digital video signal processing operation will now be described. By manually operating the switch 1, an instruction to start the recording is given to the recording circuit 16 through the control circuit 3, so that the recording of the motion picture signal is started. On the other hand, the instruction signal to start the recording of the still image signal is given by manually operating the switch 2. However, it is convenient that such an instruction signal is controlled by the control circuit 3 so as to be effective only when the video camera and the VTR section are set in the recording mode and the recording of the one-preceding still image signal has been completed. It is preferable that a message indicative of the completion of the recording of the one-preceding still image signal is displayed, for instance, in the view finder 20 or the like attached to the video camera. In this case, if the still image signal itself which is being recorded at present is displayed in the whole picture plane of the view finder 20 or a part thereof, the content of the image can be also confirmed and it is convenient when the video camera is operated. Since there is also a case where the user cannot wait for a time of a few seconds until the recording of the still image is completed, there is also considered a method whereby the recording is controlled on the basis of the timing when the switch 2 was finally depressed as a highest priority. In such a case, since the data during the recording remains as it is, in order to discriminate whether the data is effective or not, it is sufficient to transmit the data indicative of the recording start and end points of each still image signal together with the image data. Further, it is also possible to construct in a manner such that after the recording of the motion picture signal was once started by the switch 1, the digital still image signal is automatically recorded at a predetermined time interval. In this case as well, when the switch 2 is depressed, if the instantaneous video image at this time point is preferentially recorded, the will of the photographer is clearly reflected. When the start of the recording is instructed as mentioned above, the circuit to form the digital still image is made operative.

In the video camera output which gives the motion picture signal, the luminance signal which is obtained as an output of the LPF 10 and the two kinds of color difference signals which are obtained as outputs of the LPFs 11 and 12 are supplied to the A/D converter 27. In general, a predetermined relation must exist betwen the clock signal to control the operation of the A/D converter 27 and the frame frequency of the video signal which is recorded. Therefore, the synchronization information which was separated from the output data of the A/D converter 27 by the vertical sync signal separating circuit 29 is supplied to the clock generating circuit 30 and is controlled by the PLL circuit so as to have a desired frequency. The A/D converter 27 operates by the sampling clocks which are formed by the clock generating circuit 30. The still image video signal indicative of the data of 167 Mbits/sec as mentioned above is supplied and stored into the RAM 28. At the same time, the synchronization information separated by the vertical sync signal separating circuit 29 is supplied to the RAM control circuit 31 in a form of the clock signal and timing control signal which are supplied from the clock generating circuit 30 and gives a write clock to the RAM 28. The still image signal recording instruction signal from the switch 2 and the signal indicative of the timing for the recording process from the PCM processing circuit 33 are also given to the RAM control circuit 31. When the still image signal of one frame has once been stored into the RAM 28, in a manner similar to the case of the recording of the digital audio signal, the still image signal is supplied from the RAM 28 to the switching circuit 32 in a form of the data similar to the form of the output of the A/D converter 27 by the clocks and the read instruction signal regarding the rotating frequency of the rotary cylinder 21 which are given from the PCM processing circuit 33. After that, by the signal processes similar to those of the digital audio signal, the code signal for error detection, the control signal indicating that the recording signal is the still image signal, and the like are added to the data and the still image signal is recorded onto the tape 17.

The embodiment will now be described with respect to the function of the video camera section with reference to the drawings. Fig. 4 is a diagram showing the operation principle of an image pickup device section, for instance, a CCD (Charge Coupled Device) sensor of the video camera having what is called an electronic shutter function in which the effective light receiving period can be controlled. The period of time when the CCD accumulates charges is determined by the interval between the first read pulse and the next read pulse. In the case of the NTSC system, the pulse interval for field accumulation is set to 1/60 second and that for the frame accumulation is set to 1/30 second. The electronic shutter function has been considered as means for changing the accumulation time. The electronic shutter is based on the following principle. That is, the charge which have been accumulated until now are swept out and the sensor is set into the empty state. Then, the charges of an arbitrary time are accumulated. After that, the charges are read out and a pulse is set to the high level and the signal is read out. Fig. 4 is a diagram showing a potential distribution in the vertical direction of the sensor section. In the ordinary operating mode, the charges are accumulated into the sensor section by a set substrate voltage $V_{sub}$. On the other hand, in the operation of the electronic shutter, the barrier on the substrate side is broken by the voltage $\Delta V_{sub}$ which was further added to $V_{sub}$, so that the charges accumulated in the sensor are swept out to the substrate as shown by an arrow.

By using the above function, the shutter speed is adjusted in accordance with the moving speed of an object and the blur of the motion picture can be suppressed. That is, the optimum output can be obtained as a still image signal. By providing such a function for the video camera section and by always selecting the optimum shutter speed, the effect of the invention can be further made the most of. On the other hand, in the ordinary motion picture signal recording mode, if the shutter speed is made high, the effective sensitivity of the video camera deteriorates. Therefore, there is also considered a method whereby although the electronic shutter mode is ordinarily made operative in the digital still image signal recording mode, when only the motion picture signal is recorded, the electronic shutter mode can be cancelled, or the like.

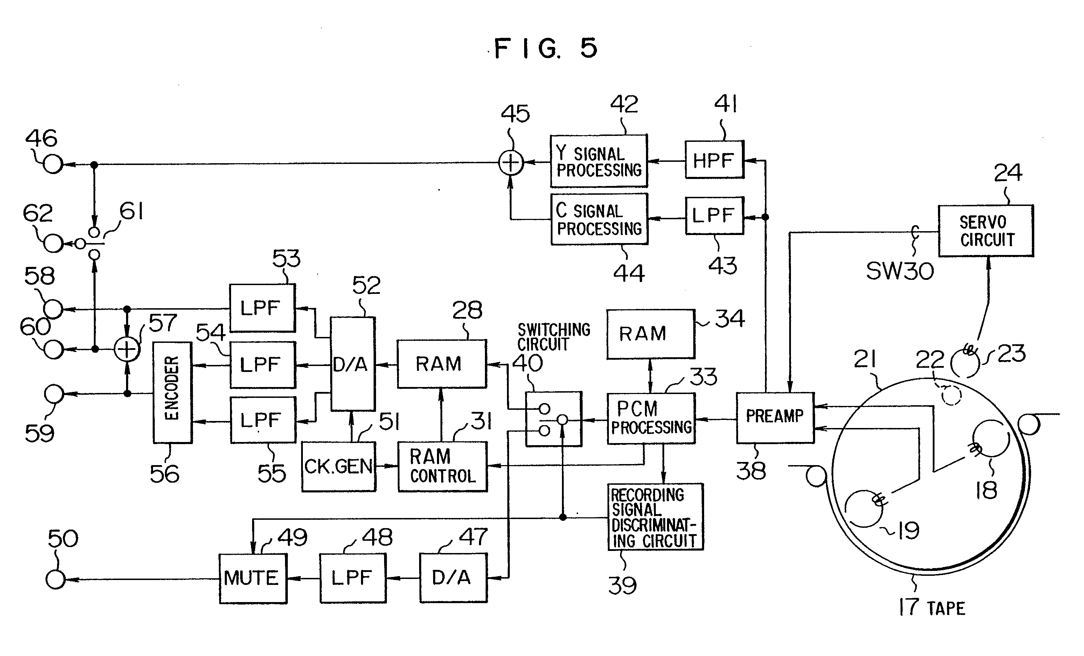

An embodiment of a system of the reproducing system in the case of reproducing the signal which was recorded by the embodiment shown in Fig. 1 will be described. Fig. 5 is a block daigram showing a reproducing system of a magnetic recording and reproducing apparatus which can concurrently record a digital still image signal of a high picture quality and a motion picture signal. Reference numeral 38 denotes a preamplifier; 39 a recording signal discriminating circuit; 40 and 61 switching circuit; 41 a high pass filter (HPF); 42 a reproduced luminance (Y) signal processing circuit; 43, 48, 53, 54, and 55 LPFs; 44 a reproduced chrominance (C) signal processing circuit; 45 and 57 adding circuits; 46 a reproduced motion picture signal output terminal; 47 and 52 digital/analog (D/A) converters; 49 an output shut-off circuit; 50 a reproduced audio signal output terminal; 51 a reference clock generating circuit; 56 a chrominance signal encoder; 58 a reproduced still image luminance signal output terminal; 59 a reproduced still image chrominance signal output terminal; 60 a reproduced still image NTSC signal output terminal; and 62 a reproduced motion picture/still image switching output terminal. In Fig. 5, the parts and components having substantially the same functions as those in Fig. 1 are designated by the same reference numerals.

After the signals reproduced by the heads 18 and 19 were amplified by the preamplifier 38, the video signals are supplied to the HPF 41 and LPF 43 and the signal recorded in the digital audio signal recording area is supplied to the PCM processing circuit 33. The frequency modulated (FM) luminance signal component is extracted from the reproduced signal by the HPF 41. The frequency demodulation and the deemphasis process are executed by the reproduced luminance signal processing circuit 42, thereby obtaining the reproduced luminance signal. On the other hand, the low frequency converted chrominance signal is extracted from the reproduced signal by the LPF 43. The normal frequency converted carrier chrominance signal is derived by the reproduced chrominance signal processing circuit 44. Outputs of the reproduced luminance signal processing circuit 42 and reproduced chrominance signal processing circuit 44 are added by the adding circuit 45 and are set into a form of what is called an NTSC signal. The resultant signal is output from the output terminal 46.

The signal which had been recorded in the digital audio signal recording area and was supplied to the PCM processing circuit 33 is once stored and recorded into the RAM 34. The recording signal discriminating circuit 39 discriminates whether the recording signal is the digital audio signal or the digital still image signal. If it is determined by the discriminating circuit 39 that the recording signal is the digital audio signal, the switching circuit 40 is switched so as to supply the reproduction data to the digital audio signal processing section. The PCM processing circuit 33 executes the process corresponding to the reproduction data and supplies the error corrected digital data to the D/A converter 47 through the switching circuit 40. The D/A converter 47 converts the input digital data into the analog audio signal. Further, the unnecessary high frequency component is eliminated from the analog audio signal by the LPF 48 and the resultant signal is output from the audio signal output terminal 50. However, if it is determined by the discriminating circuit 39 that the recording signal is the digital still image signal, since there is a possibility such that if the recording data is output as it is, a large noise is generated, the output is shut off by the output shut-off circuit 49.

On the other hand, if it is determined by the discriminating circuit 39 that the reproduced digital data is the digital still image signal, it is subjected to the error correction and the process corresponding to the digital data by the PCM processing circuit 33. After that, the processed signal is supplied to the RAM 28 through the switching circuit 40. In the RAM control circuit 31, in accordance with an instruction from the PCM processing circuit 33, the data is stored and recorded at the correct position of the image in the RAM 28. The RAM control circuit 31 receives a signal serving as a reference of the output frequency of the reproduced still image signal from the reproduction clock generating circuit 51. On the other hand, the D/A converter 52 also generates the analog output signal from the digital data of the output of the RAM 28 in response to the clocks from the reproduction clock generating circuit 51. An output signal of the D/A converter 52 is divided into the luminance signal (Y) and two kinds of color difference signals (R-Y, B-Y) in accordance with the format of the recording signal. In the output signal of the D/A converter 52, the unnecessary high frequency component in the reproduced still image luminance signal (Y) is eliminated by the LPF 53. After that, the luminance signal (Y) is output from the reproduced still image luminance signal output terminal 58. On the other hand, in the output signal of the D/A converter 52, the unnecessary high frequency components in the two kinds of reproduced still image color difference signals (R-Y, B-Y) are eliminated by the LPFs 54 and 55. After that, the color difference signals are input to the chrominance signal encoder 56. In the chrominance signal encoder 56, the carrier chrominance signal which was orthogonal two-phase modulated and is specified by the NTSC or PAL system is produced from the two kinds of color difference signals. An output of the encoder 56 is directly supplied to the reproduced still image chrominance signal output terminal 59. By supplying the outputs of the output terminals 58 and 59 to the Y/C separating type monitor, a still image signal of a high picture quality can be obtained. It is also obviously possible to construct in a manner such that the reproduced still image luminance signal and the reproduced still image chrominance signal are added by the adding circuit 57 and the added signal is output from the reproduced still image NTSC signal output terminal 60 in a form of the NTSC signal, so that a reproduced still image can be also displayed by a general purpose monitor. On the other hand, if the outputs of the adding circuits 45 and 57 can be switched and output by the switching circuit 61 as necessary, both of the reproduced motion picture signal and the reproduced still image signal can be also selectively monitored by the same NTSC or PAL monitor. In a manner similar to the case of the digital audio signal process, upon reproduction of the digital audio signal, it is also effective to shut off the outputs of the output terminals 58, 59, and 60 by a shut-off circuit (not shown). In the embodiment of Fig. 5, there is shown an example in which the still image signal was encoded in a form of what is called a component signal of 4 : 2 : 2. However, it is also possible to encode and record the still image signal in the NTSC or PAL signal format, that is, in the composite form. In such a case, the output signal of the D/A converter 52 has a composite signal format and the encoder 56, adding circuit 57, LPFs 54 and 55, etc. are apparently unnecessary. On the other hand, although the output of the PCM processing circuit 33 is distributed to the audio signal processing system and the still image signal processing system by the switching circuit 40, the data can be also always supplied to the D/A converter 47 and RAM 28.

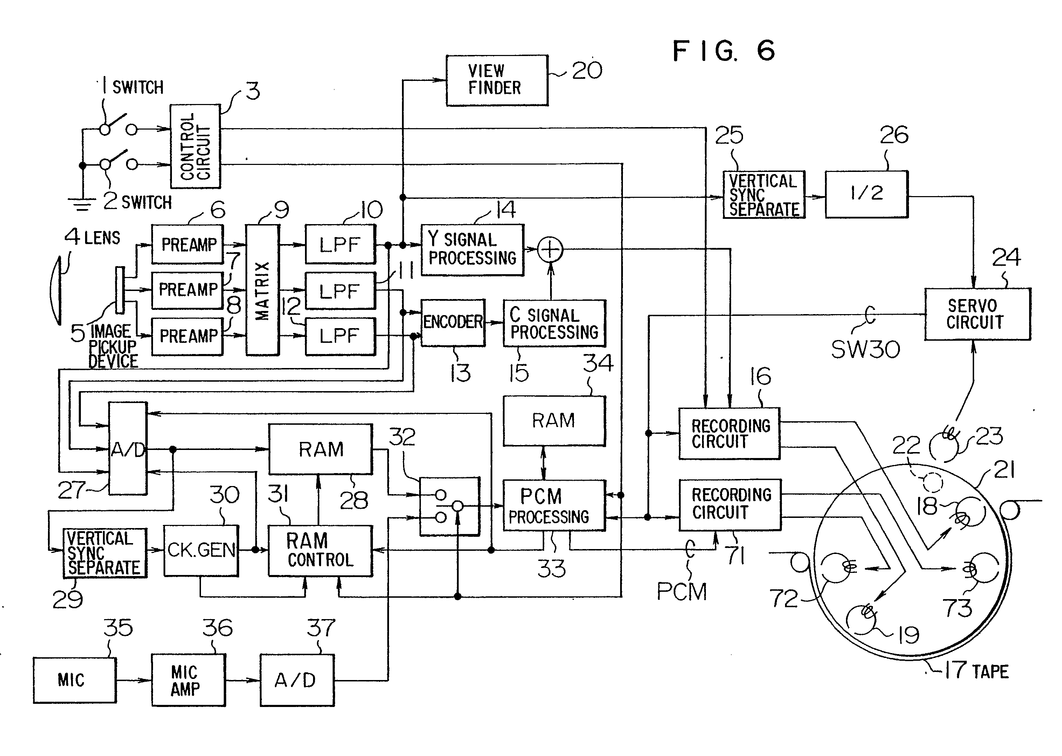

An embodiment of a recording system of another recording and reproducing apparatus to which the invention was applied will now be described. In the embodiment, the recording method of the digital audio signal differs from that shown in Fig. 1 and uses a method as shown in JP-A-63-·171402 whereby signals are multiplexed in the direction of a thickness of a magnetic film of the tape. Fig. 6 is a block diagram showing the system of the recording system in another embodiment to which the invention was applied. In Fig. 6, reference numeral 71 denotes a digital signal recording circuit and 72 and 73 indicate digital signal recording heads. In Fig. 6, the parts and components having substantially the same functions as those in Fig. 1 are designated by the same reference numerals.

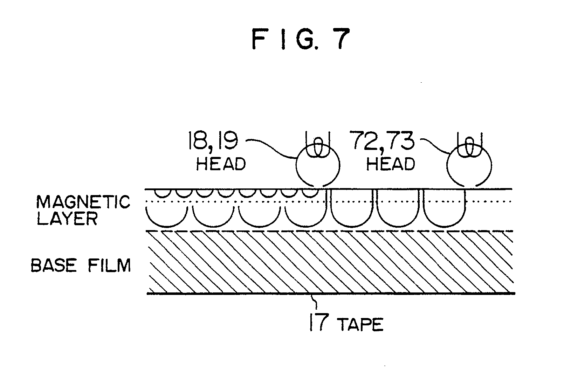

The embodiment largely differs from the embodiment of Fig. 1 with respect to the recording method of the digital signal. In the embodiment, as shown in Fig. 7, the digital audio signal is first recorded in almost the same area as the video signal in the direction of a thickness of the magnetic film of the tape 17 at the wrap angle of the rotary cylinder 21 by the heads 72 and 73 each having a relatively large gap interval. Then, the motion picture signal is recorded so as to trace on the portion corresponding to the portion of the recorded digital audio signal by the heads 18 and 19 each having a relatively small gap interval. Since the digital audio signal which has been first recorded is recorded until the deep layer of the magnetic material by the heads 72 and 73 each having a relatively large gap interval, even when the motion picture signal is subsequently recorded by the heads 18 and 19 each having a relatively small gap interval after that, only the digital audio signal recorded in the surface layer portion is erased. Therefore, after completion of the recording, as shown in the left half portion in Fig. 7, the digital audio signal is recorded in the deep portion in the direction of thickness of the magnetic material and the motion picture signal is recorded in the shallow portion. If the digital audio signal was recorded by a relatively long wavelength, even when no signal is recorded in the surface layer portion, the digital information can be sufficiently reproduced. According to the above method, what is called an after recording such that only an audio signal is newly rerecorded later cannot be performed. However, there are advantages such that there is no need to increase the wrap angle of the tape 17 to the rotary cylinder 21 and there is an excellent compatibility with the conventional format in which only the motion picture image is recorded.

In Fig. 6, since the recording method of the motion picture signal is substantially the same as that in Fig. 1, its description is omitted here. Only the motion picture recording signal is supplied to the recording circuit. Therefore, only the motion picture signal is recorded by the heads 18 and 19. On the other hand, in the PCM processing circuit 33, after the error correction signal and the like were added to the data recorded in the RAM 34, the data is supplied to the digital signal recording circuit 71 without substantially executing the time base compression (it is necessary to execute a slight compressing process in order to avoid influences by noises, skew, and the like which occur upon switching of the tracks). In the digital signal recording circuit 71, the motion picture signal is never recorded but only the digital audio signal and the digital still image signal, which will be explained hereinlater, are recorded. Since the recording by the heads 72 and 73 is executed precedently than the recording by the heads 18 and 19, both of the motion picture signal and the digital audio signal are left on the tape 17 as mentioned above.

On the other hand, the digital still image signal is processed in a manner similar to the case of Fig. 1 and is recorded by the heads 72 and 73 by the PCM processing circuit 33 in a format similar to the case of the digital audio signal mentioned above. In this case as well, in a manner similar to Fig. 1, the ID signal indicating that the recording signal is the still image signal is multiplexed to the digital data and recorded.

The method of reproducing the signal which was recorded by the method of the embodiment shown in Fig. 6 can be realized by individually preparing a preamplifier (not shown) for the motion picture signal to amplify the reproduction signal from the tape and a preamplifier (not shown) to reproduce the digital signal. Since the subsequent signal processes are substantially the same as those in the case of Fig. 5, their descriptions are omitted.

Although the invention has been described above with respect to the embodiments, the invention is not limited to the above embodiments but can be generally applied to a system in which an area in which digital information can be recorded is prepared in addition to an area to record the motion picture signal. The invention can provide a system in which both of the motion picture signal and the still image signal of a high picture quality can be concurrently recorded and reproduced.

Although the above embodiments have been described on the assumption that the signal of the existing broadcasting system such as NTSC, PAL, etc. is used as a motion picture signal or a still image signal, the invention can be also applied to what is called an HD (High Definition) TV system in which the signal format(s) of either one or both of the motion picture signal and the still image signal is(are) different from the existing broadcasting system. By setting the format of the still image signal to the HDTV system, for instance, in the case where the still image signal is printed out and used, it is extremely effective. In such a case, it is necessary to prepare the video camera of the HDTV system.

As described above, according to the invention, the motion picture signal is recorded in substantially the same manner as the conventional format, and even during the photographing operation by the video camera, a video image at a timing of the optimum shutter chance can be selectively recorded as a still image signal of a high picture quality at an arbitrary timing in the portion where the digital audio signal has conventionally been recorded as digital information. Therefore, it is possible to provide an excellent video audio recording and reproducing apparatus in which a drawback in the conventional technique such that both of the VTR integrated type video camera and the electrophotographic system must be always prepared is eliminated and the functions of both of the video camera and the electrophotographic system are integrated and both of the motion picture signal and the still image signal can be concurrently recorded.

## Claims

1. A digital still image signal recording and reproducing apparatus in a video audio recording and reproducing apparatus in which a video signal is recorded as a recording locus which was scanned obliquely from a running direction of a tape (17) and a digital audio signal is also similarly recorded into an area different from the area of the video signal on the same tape (17) as a recording locus which was scanned obliquely from the tape running direction, comprising:

a television camera for photographing an motion picture signal and outputting;

a digital memory (28) for storing arbitrary field or frame information from an output signal of the television camera; and

means (16) for recording the motion picture signal which was output from the television camera and for concurrently recording the digital video signal which was recorded in the digital memory into the digital audio signal recording area together with a discrimination signal indicating that a recording signal is other than the audio signal so as to be divided into a plurality of tracks.

2. A digital still image signal recording and reproducing apparatus according to claim 1, comprising:

a first manual switching circuit (1) to instruct the recording means (16) to start the recording of the motion picture signal onto the tape (17); and

a second manual switching circuit (2) to instruct to start the writing of a desired still image signal into the digital memory (28),

and wherein only when the recording of the motion picture signal onto the tape (17) is started by the first switching circuit (1), an instruction signal by the second switching circuit (2) is made effective, and the still image signal recorded in the digital memory (28) is recorded into the digital audio signal recording area.

3. A digital still image signal recording and reproducing apparatus according to claim 2, wherein when the recording means is recording the digital still image signal into the digital audio signal recording area, the instruction signal from the second manufal switching circuit (2) is made ineffective.

4. A digital still image signal recording and reproducing apparatus according to claim 2, wherein the recording means continuously records the digital still image signals which were selected every other predetermined period into the digital audio signal area by the instruction signal from the second manual switching circuit (2).

5. A digital still image signal recording and reproducing apparatus according to claim 4, wherein the recording means continuously records the digital still image signals which were selected every other predetermined period into the digital audio signal area by the instruction signal from the second manual switching circuit (2), and when a new instruction signal is output from the second manual switching circuit (2), the recording means continuously records the digital still image signals which were newly selected every other predetermined period by using the time point of the output of said new instruction signal as a start point into the digital audio signal area.

6. A digital still image signal recording and reproducing apparatus according to claim 1, comprising:

a view finder (2); and

means for displaying the still image signal which is being recorded to a whole picture plane of the view finder (20) or a part thereof when the recording means is recording the digital still image signal.

7. A digital still image signal recording and reproducing apparatus according to claim 1, wherein the video camera has a function to set an effective light receiving period in one field period into a value which is equal to or shorter than one field period.

8. A digital still image signal recording and reproducing apparatus according to claim 7, wherein the video camera has a function to set the effective light receiving period in one field period to a value which is equal to or shorter than one field period, and when the digital still image signal is recorded into the digital audio signal area, the function is made operative.

9. A digital still image signal recording and reproducing apparatus according to claim 1, wherein the recording means records information of reocrding start and end points of the digital still image signal into the digital audio signal area together with the digital still image signal.

10. A digital still image signal recording and reproducing apparatus according to claim 1, wherein the recording means records the still image signal of a component signal format into the digital audio signal recording area.

11. A digital still image signal recording and reproducing apparatus in a video audio recording and reproducing apparatus in which a video signal is recorded as a recording locus which was scanned obliquely from a running direction of a tape (17) and a digital audio signal is also similarly recorded into an area different from an area of the video signal on the same tape (17) as a recording locus which was scanned obliquely from the tape running direction, comprising:

a television camera for photographing a motion picture signal and outputting;

a digital memory (28) for recording an arbitrary field or frame signal from an output signal of the television camera;

means (16, 17) for reproducing the motion picture signal which was output from the television camera and also concurrently recording the digital video signal recorded in the digital memory (28) into the digital audio signal recording area together with a discrimination signal indicating that a recording signal is other than the audio signal so as to be divided into a plurality of tracks;

means (38) for respectively independently reproducing the recorded motion picture signal and the signal recorded in the digital audio signal recording area;

means (39) for detecting the discrimination signal from the signal obtained by reproducing the signal recorded in the digital audio signal recording area and for discriminating the recorded information;

means (40) for reproducing and outputting the audio signal by an audio processing circuit (33) if it is determined by the discriminating means (39) that the digital audio signal has been recorded;

means (49) for stopping the process of the digital audio signal and for shutting off the output of the audio signal if it is determined by the discriminating means (39) that the digital still image signal has been recorded; and

means (31) for storing the reproduced still image signal into the digital memory (28) and outputting the reproduced still image signal after the still image signal of at least one field was reproduced if it is determined by the discriminating means (39) that the digital still image signal has been recorded.

12. A digital still image signal recording and reproducing apparatus according to claim 11, having a switch (61) for selectively outputting the reproduced motion picture signal and the reproduced digital still image signal.

FIG. 1

EP 0 405 491 A2

# FIG. 2

17 TAPE

# FIG. 3

a  TRACK SWITCHING SIGNAL

1 FIELD

b  HEAD 18 RECORDING CURRENT

AUDIO | VIDEO SIGNAL | AUDIO | VIDEO SIGNAL

c  HEAD 19 RECORDING CURRENT

VIDEO | AUDIO | VIDEO SIGNAL | AUDIO | VIDEO

# FIG. 4

CHARGES ACCUMULATED IN SENSOR SECTION

HOLE ACCUMULATING LAYER

$V = V_{sub}$
ORDINARY OPERATING MODE

$\Delta V_{sub}$

$V = V_{sub} + \Delta V_{sub}$
WHEN ELECTRONIC SHUTTER OPERATES

# FIG. 5

EP 0 405 491 A2

# FIG. 6

EP 0 405 491 A2

# F I G. 7

18,19 HEAD    72,73 HEAD

MAGNETIC LAYER

BASE FILM

17 TAPE